# EUROPEAN PATENT APPLICATION

(11) **EP 4 517 973 A1**
(43) Date of publication of application: **05.03.2025**
(21) Application number: 22952502.7
(22) Date of filing: 29.07.2022
(51) Int. Cl.: H01M 50/244, H01M 50/249, H01M 50/258, H01M 10/613, H01M 10/6556

(54) **BATTERY BOX, BATTERY, AND ELECTRICAL DEVICE**

(71) Applicant: Contemporary Amperex Technology (Hong Kong) Limited, Central, Central And Western District (HK)
(72) Inventor: YAO, Pengcheng, Ningde, Fujian 352100 (CN); XUE, Danyue, Ningde, Fujian 352100 (CN); WANG, Peng, Ningde, Fujian 352100 (CN)
(74) Representative: Gong, Jinping
(86) International application number: PCT/CN2022/109087
(87) International publication number: WO 2024/021055

(57) **Abstract**

The embodiments of the present application provide a housing of a battery. The housing includes a support plate and a plurality of side beams. The side beams are connected to the support plate and enclose with the support plate to form an accommodating space. At least one of the side beams includes a beam body and a buffer portion. The buffer portion is provided to protrude from the beam body toward the accommodating space and extend in a length direction of the beam body. The buffer portion is located on a side of the beam body away from the support plate. **In** this present application, the buffer portion is provided on a side of the side beam facing the accommodating space, so a part of the external force can be absorbed by the buffer portion after the housing is compressed by an external force and the force received by an external structure of the housing is transmitted to the buffer portion, which reduces the compression of the external force on the battery cell in the housing.

## Description

### TECHNICAL FIELD

The present application relates to the field of battery technology, and more particularly, to a housing of a battery, a battery and a power consumption device.

### BACKGROUND

Battery cells are widely used in electronic devices, such as mobile phones, notebook computers, electromobiles, electric vehicles, electric airplanes, electric ships, electric toy cars, electric toy ships, electric toy airplanes, and electric tools. The battery cells may include a nickel-cadmium battery cell, a nickel-hydrogen battery cell, a lithium-ion battery cell, a secondary alkaline zinc-manganese battery cell, and the like.

With the development of electronic devices, great demands are made on the safety performance of the battery package integrated by the battery cells and the impact resistance performance of the electronic device, improving the strength of the battery package of the housing on the premise of easy mounting and low cost is an urgent problem to be solved in the battery technology.

### SUMMARY

The present application provides a housing of a battery, a battery and a power consumption device, which can improve the overall strength of the battery package.

In the first aspect, an embodiment of the present application provides a housing of a battery, including a support plate; and a plurality of side beams which are connected to the support plate and enclose with the support plate to form an accommodating space, wherein at least one of the side beams includes a beam body and a buffer portion which is provided to protrude from the beam body toward the accommodating space and extend in a length direction of the beam body, and the buffer portion is located on a side of the beam body away from the support plate.

In the above-mentioned technical solution, the buffer portion is added on the side beam so as to reduce the compressing force received by the side beam, so the compression resistance performance of the side beam is improved, which reduces the possibility of the battery cell in the housing being compressed, deformed or even damaged, improving the safety of the housing of the battery. In this technical solution, the buffer portion is provided on a side of the side beam facing the accommodating space, so a part of the external force can be absorbed by the buffer portion after the housing is compressed by an external force and the force received by an external structure of the housing is transmitted to the buffer portion, which reduces the compression of the external force on the battery cell in the housing.

In some embodiments, the buffer portion includes a plurality of buffer blocks arranged to be spaced apart in the length direction.

In the above technical solution, the plurality of buffer blocks can effectively reduce the weight that the buffer portion brings to the housing, and the buffer block can utilize the space between the housing and the internal battery cell, so as to improve the utilization of the housing.

**In** some embodiments, the plurality of buffer blocks are arranged to be equally spaced apart in an extension direction of the beam body.

**In** the above-mentioned technical solution, equally spaced arrangement facilitates the manufacture of the buffer block, reducing the process difficulty.

**In** some embodiments, in the extension direction of the beam body, a distance between two adjacent buffer blocks is L1, and 1 mm≤L1≤1500 mm.

**In** the above technical solution, the smaller the distance between adjacent buffer blocks, the larger the quantity of the buffer blocks and the more the increased weight of the buffer blocks, which is not conducive to the lightweight of the housing. The larger the distance between adjacent buffer blocks, the fewer the number of buffer blocks, the smaller the buffering effect of the buffer blocks, and the smaller the compression resistance performance of the housing. In this technical solution, the distance between adjacent buffer blocks is limited to 1mm≤L1≤1500mm, so as to balance the light weight and compression resistance performance of the housing.

In some embodiments, the distance L1 between the two adjacent buffer blocks satisfies a relationship of 5 mm ≤ L1 ≤ 20 mm.

In the above technical solution, the spacing between adjacent buffer blocks is further restricted, so that the buffer blocks can obtain better compression resistance property.

In some embodiments, the buffer portion further includes an avoidance structure for avoiding a component accommodated in the accommodating space.

In the above-mentioned technical solution, the avoidance structure can enable the buffer portion to further utilize the clearance of the batteries in the accommodating space, so the integral volume of buffer portion increases, enabling the buffer portion to absorb much external force, which improves the compression resistance performance and space utilization of the housing.

In some embodiments, the avoidance structure includes a gap between two adjacent buffer blocks.

In the above technical solution, the gap between adjacent buffer blocks may be configured to receive various components of the battery in the housing, avoiding interference between the buffer blocks and the components in the accommodating space, which improves the space utilization of the buffer portion.

In some embodiments, the buffer block includes a body portion and an avoidance portion extending from the body portion toward the support plate, the avoidance portion being provided protruding from the beam body toward the accommodating space; and wherein in a protruding direction of the avoidance portion, a thickness of the body portion is larger than a thickness of the avoidance portion.

In the above-mentioned technical solution, the thickness of avoidance portion is smaller than the thickness of body portion, and it may be filled in an area which cannot be protected by the body portion and in which the gap inside the housing is small, increasing the protection area of buffer portion and then improving the compression resistance performance of the housing.

**In** some embodiments, the avoidance structure further includes an avoidance space from a surface of the avoidance portion to a surface of the body portion in the protruding direction.

**In** the above-mentioned technical solution, the avoidance space formed by the avoidance portion and the body portion is configured to receive the component in the housing and to protect the component in the avoidance space, reducing the influence of the external compressing force on the component in the avoidance space.

**In** some embodiments, a thickness of the body portion in the protruding direction is H1, and 5 mm≤H1≤100 mm.

**In** the above technical solution, the smaller the thickness of the body portion, the less external force the body portion can absorb and the smaller the impact resistance property can be achieved. The greater the thickness of the main body, the greater the space occupied by the main body and the weight of the main body, and the higher the cost. In the above technical solution, the thickness of the main body is limited to 5 mm≤H1≤100 mm, so as to reduce the thickness of the main body as much as possible while ensuring the impact resistance property of the main body.

In some embodiments, a thickness of the avoidance portion in the protruding direction is H2, and H1 and H2 satisfy the relationship of 0.005≤H2/H1<1.

In the above technical solution, the smaller the ratio of the thickness of the avoidance portion to the thickness of the body portion, the smaller the impact resistance performance of the avoidance portion. The larger the ratio of the thickness of the avoidance portion to the thickness of the main body, the greater the space occupied by the avoidance portion and the weight of the avoidance portion, and the higher the cost. In the above technical solution, the thickness of the avoidance portion is limited to 0.005≤H2/H1<1, so as to reduce the thickness of the avoidance portion as much as possible while ensuring the impact resistance property of the avoidance portion.

In some embodiments, a height of the body portion in a thickness direction of the support plate is D1, and 10 mm≤D1≤100 mm.

In the above technical solution, the lower the height of the body portion, the smaller the impact resistance property of the body portion. The higher the height of the main body, the greater the space occupied by the main body and the weight of the main body, and the higher the cost. The height of the main body is reduced as much as possible while ensuring the impact resistance property of the main body.

In some embodiments, a height of the avoidance portion in a thickness direction of the support plate is D2, and 10 mm≤D1≤100 mm.

In the above technical solution, the smaller the ratio of the height of the avoidance portion to the height of the body portion, the smaller the impact resistance property of the avoidance portion. The larger the ratio of the height of the avoidance portion to the height of the main body, the greater the space occupied by the avoidance portion and weight of the avoidance portion, and the higher the cost. The height of the avoidance portion should be reduced as much as possible while ensuring the impact resistance property of the avoidance portion.

In some embodiments, the buffer portion includes a connection portion which connects the plurality of buffer blocks in an extension direction of the beam body.

In the above-mentioned technical solution, the compressing force that buffer portion is subjected to can spread in the plurality of buffer blocks through the connecting portion, so the compressing force on the local buffer portion is converted into the the compressing force on the whole buffer portion, thereby reducing the influence of the compression force on the buffer portion, which improves the compression resistance performance of the housing.

In some embodiments, the buffer portion and the beam body are integrally formed.

In the above technical solution, integral formation can reduce an assembly step and improve assembly efficiency.

In some embodiments, the buffer portion is fixedly connected to the beam body.

In the above-mentioned technical solution, the buffer portion and the beam body are divided into two independent individuals, and the position of the buffer portion can be adjusted based on the position of the battery in the housing, thereby reducing the requirement on the process error of the buffer portion, which reduces the cost of the manufacture of the buffer portion.

In some embodiments, the buffer portion includes a plurality of sub-buffer portions which are arranged to be spaced apart in the length direction of the beam body, and a gap between two adjacent sub-buffer portions forms an avoidance space.

In the above-mentioned technical solution, the buffer portion is divided into a plurality of sub-buffer portions, which can enable the buffer portion to be placed in the housing for adapting to different internal structures, which avoids the interference between the buffer portion and the structure inside the housing, improving the utilization in the housing.

In a second aspect, an embodiment of the present application provides a battery, including the plurality of housing of the battery of any one of the embodiments in the first aspect; and a battery cell which is accommodated in an accommodating space.

In some embodiments, a thermal management component, which is accommodated in the accommodating space and configured to adjust temperature of the battery cell, is further included, the housing includes an avoidance structure, and the avoidance structure of the buffer portion in the housing is configured to avoid the thermal management component.

In the above technical solution, the buffer portion is placed in the accommodating space adjacent to the thermal management component, so as to protect the thermal management component, which prevents the thermal management component from being deformed or damaged by the compressing force, improving the safety of the housing of the battery.

In some embodiments, the thermal management component includes a plurality of heat exchange plates arranged to be spaced apart, and the battery cell is arranged between adjacent heat exchange plates; and the buffer portion includes a plurality of buffer blocks arranged to be spaced apart, and the avoidance structure includes a gap between the buffer blocks, and the gap is configured to accommodate an end of the heat exchange plate.

In the above technical solution, the end of the heat exchange plate protrudes from the buffer block, and the protruding end of the heat exchange plate may be accommodated by the avoidance structure of the buffer portion, furthermore, the connecting portion in the buffer can protect the end of the heat exchange plate, which reduces the influence of the compressing force on the end of the heat exchange plate, further improving the protection of the buffer portion for the heat exchange plate.

In some embodiments, the thermal management component includes a converging pipe which is communicated with the plurality of heat exchange plates; the buffer block includes a body portion and an avoidance portion, the body portion is located on a side of the beam body away from the support plate, and the avoidance portion is located on a side of the body portion close to the support plate and protrudes from the beam body toward the accommodating space; and wherein the avoidance structure includes a avoidance space from a surface of the avoidance portion to a surface of the body portion in a protruding direction, and at least a portion of the converging pipe is located in the avoidance space

In the above technical solution, the avoidance portion in the buffer portion is adjacent to the converging pipe, so as to protect the converging pipe, which reduces the influence of the external compressing force on the converging pipe, improving the protection of the buffer portion for the converging pipe. Furthermore, the converging pipe is placed in the avoidance space between the avoidance portion and the main body, the main body can also absorb the compressing force from the direction of the support portion, and the converging pipe can be protected from being affected by the compressing force in a plurality of directions.

In a third aspect, an embodiment of the present application provides a power consumption device, including the battery of any one of the embodiments of the second aspect for providing electrical energy.

### BRIEF DESCRIPTION OF THE DRAWINGS

In order to more clearly describe the technical solutions of the embodiments of the present application, drawings that need to be used in the embodiments of the present application will be briefly introduced as below, and it is obvious for those skilled in the art that the drawings described below are only some embodiments of the present application and other drawings can be obtained based on the drawings without creative work.
Fig. 1 is a structural schematic diagram of a vehicle provided by some embodiments of the present application;
Fig. 2 is a exploded schematic diagram of a battery provided by some embodiments of the present application;
Fig. 3 is a structural schematic diagram of a housing of the battery provided by some embodiments of the present application;
Fig. 4 is a structural schematic diagram of a buffer portion of a housing of a battery provided by some embodiments of the present application;
Fig. 5 is another perspective schematic diagram of the housing of the battery shown in Fig. 3;
Fig. 6 is a cross-sectional structural schematic diagram along a line A-A in Fig. 5;
Fig. 7 is another perspective schematic diagram of a buffer portion of the housing of the battery shown in Fig. 4;
Fig. 8 is an exploded schematic diagram of the battery provided by some embodiments of the present application;
Fig. 9 is a structural schematic diagram of the battery provided by some embodiments of the present application;
Fig. 10 is a cross-sectional structural schematic diagram along a line B-B in Fig. 9;

In the drawings, the drawings are not drawn to actual scale.

### Reference numbers:

1000, vehicle; 2000, battery; 2010, housing; 2020, battery cell; 2030, thermal management component; 2031, heat exchange plate; 2032, converging pipe; 3000, controller; 4000, motor;
100, support plate;
200, side beam; 210, beam body; 220, buffer portion; 220a, sub-buffer portion; 221, buffer block; 221a, body portion; 221b, avoidance portion; 222, avoidance structure; 222a, gap; 222b, avoidance space; 230, connecting portion;
X, extension direction; Y, protruding direction; Z, thickness direction.

### DETAILED DESCRIPTION

In order to make the objects, technical solutions and advantages of the embodiments of the present application clearer, the technical solutions in the embodiments of the present application will be clearly described below in conjunction with the accompanying drawings the embodiments in the present application, and obviously, the described embodiments are some of, rather than all of, the embodiments of the present application. All the other embodiments obtained by a person of ordinary skill in the art based on the embodiments in the present application without involving any creative effort shall fall within the scope of protection of the present application.

Unless otherwise defined, all technical and scientific terms used in the present application have the same meanings as those commonly understood by those skilled in the art to which the present application belongs; the terms used in the specification of the present application are merely for the purpose of describing specific embodiments, but are not intended to limit the present application; the terms "including" and "having" as well as any variations thereof in the description, claims and the above description of the drawings of the present application are intended to cover the non-exclusive inclusion. The terms "first", "second" and the like in the specification and the claims of the present application as well as the above drawings are configured to distinguish different objects, rather than to describe a specific order or primary-secondary relationship.

Reference in the present application to "embodiment" means that a particular feature, structure, or characteristic described in conjunction with the embodiment can be included in at least one embodiment of the present application. The occurrences of the word in various places in the specification are neither necessarily all referring to the same embodiment, nor are separate or alternative embodiments mutually exclusive of other embodiments.

In the description of the present application, it should be noted that unless otherwise explicitly specified and defined, the terms "mounting", "connecting", "connection" and "attaching" should be understood in a broad sense, for example, they may be a fixed connection, a detachable connection, or an integrated connection; may be a direct connection and may also be an indirect connection via an intermediate medium, or may be communication between the interiors of two elements. A person of ordinary skill in the art may understand the specific meanings of the foregoing terms in the present application according to specific circumstances.

In the present application, the term "and/or" is merely an association relation describing associated objects, which means that there may be three relations, for example, A and/or B may represent three situations: A exists alone, both A and B exist, and B exists alone. In addition, the character "/" in the present application generally indicates that the associated objects before and after the character are in an "or" relation.

In the embodiments of the present application, the same reference numbers represent the same components, and for the sake of brevity, in different embodiments, detailed description of the same components is omitted. It should be understood that the thickness, length, width and other dimensions of the various components in the embodiments of the present application shown in the drawings, as well as the overall thickness, length, width and other dimensions of the integrated device, are for illustrative purposes only and should not constitute any limitation to the present application.

The word "plurality of" appearing in the present application refers to two or more (two is included).

In the present application, a battery cell may include a lithium ion secondary battery cell, a lithium ion primary battery cell, a lithium sulfur battery cell, a sodium lithium ion battery cell, a sodium ion battery cell or a magnesium ion battery cell, etc., which are not limited by the embodiments of the present application. The battery cell may be in cylinder, flat, cuboid or other shapes, which are not limited by the embodiments of the present application.

The battery cell includes an electrode assembly and an electrolyte, and the electrode assembly includes a positive electrode plate, a negative electrode plate and a separator. The battery cell operates mainly depending on movement of metal ions between the positive electrode plate and the negative electrode plate. The positive electrode plate includes a positive electrode current collector and a positive electrode active material layer coated on a surface of the positive electrode current collector; the positive electrode current collector includes a positive electrode coating area and a positive electrode tab connected with the positive electrode coating area, the positive electrode coating area is coated with a positive electrode active material layer, and the positive electrode tab is not coated with a positive electrode active material layer. Taking a lithium ion battery cell as an example, the positive electrode current collector may be made of aluminum, and the positive active material layer includes a positive active material which may be lithium cobaltate, lithium iron phosphate, ternary lithium or lithium manganate, lithium iron phosphate, ternary lithium or lithium manganate. The negative electrode plate includes a negative electrode current collector and a negative electrode active material layer coated on a surface of the negative electrode current collector; the negative electrode current collector includes a negative electrode coating area and a negative electrode tab connected with the negative electrode coating area, the negative electrode coating area is coated with a negative electrode active material layer, and the negative electrode tab is not coated with a negative electrode active material layer. The negative electrode current collector may be made of copper, and the negative electrode active material layer includes a negative electrode active material which may be carbon or silicon. The separator may be made of polypropylene (PP) or polyethylene (PE).

The battery cell also includes a casing, and an accommodating cavity for accommodating the electrode assembly is formed inside the casing. The casing can protect the electrode assembly from the outside, so as to prevent external foreign matter from affecting the charging or discharging of the electrode assembly.

The battery cell is accommodated in the housing to form a battery pack, and the electric power of the battery cell is transmitted to an external electrical appliance through a circuit. The housing of the battery will be subjected to external impact during use, causing the housing of the battery to be compressed and deformed, which thereby causes damage to the battery cell inside the housing of the battery.

In related technologies, the influence of the external compressing force is reduced by increasing the thickness of the housing. Exemplarily, increase of an overall thickness of the frame in the housing or utilization of a material with better energy absorption effect can be used as a way to improve the compression resistance performance of the housing.

The inventors found that improving the compression resistance performance of the housing by increasing the thickness of the frame will increase the weight of the housing, which is not conducive to the lightweight development of the battery package. Improving the compression resistance performance of the housing by using a material with better energy absorption effect will increase the material cost of the battery package, which is not conducive to the mass production of the battery package.

In view of this, an embodiment of the present application provides a technical solution in which the housing of the battery includes a support plate; and a plurality of side beams which are connected to the support plate and enclose with the support plate to form an accommodating space, wherein at least one of the side beams comprises a beam body and a buffer portion which is provided to protrude from the beam body toward the accommodating space and extend in a length direction of the beam body, and the buffer portion is located on a side of the beam body away from the support plate. In the technical solution, the buffer portion is added on the side beam so as to reduce the compressing force received by the side beam, so the compression resistance performance of the side beam is improved, which reduces the possibility of the battery cell in the housing being compressed, deformed or even damaged, improving the safety of the housing of the battery. In this technical solution, the buffer portion is provided on a side of the side beam facing the accommodating space, so a part of the external force can be absorbed by the buffer portion after the housing is compressed by external force and the force received by an external structure of the housing is transmitted to the buffer portion, which reduces the compression of the external force on the battery cell in the housing.

The technical solutions described in the embodiments of the present application are applicable to a battery and a power consumption device using a battery.

The power consumption devices may be vehicles, mobile phones, portable devices, laptops, ships, spacecraft, electric toys,electric tools, etc. The vehicles may be fuel vehicles, gas vehicles or new energy vehicles, and the new energy vehicles may be pure electric vehicles, hybrid electric vehicles, extended-range vehicles, etc.; the spacecrafts include airplanes, rockets, space shuttles, spaceships, etc.; the electric toys include fixed or mobile electric toys, such as game machines, electric car toys, electric ship toys and electric airplane toys; the electric tools include metal cutting electric tools, electric grinding tools, electric assembling tools and electric tools for railways, such as electric drills, electric grinders, electric wrenches, electric screwdrivers, electric hammers, impact electric drills, concrete vibrators, electric planers. The embodiments of the application do not impose special restrictions on the above-mentioned power consumption devices.

For the sake of illustration, the following embodiments are illustrated with a vehicle as a power consumption device.

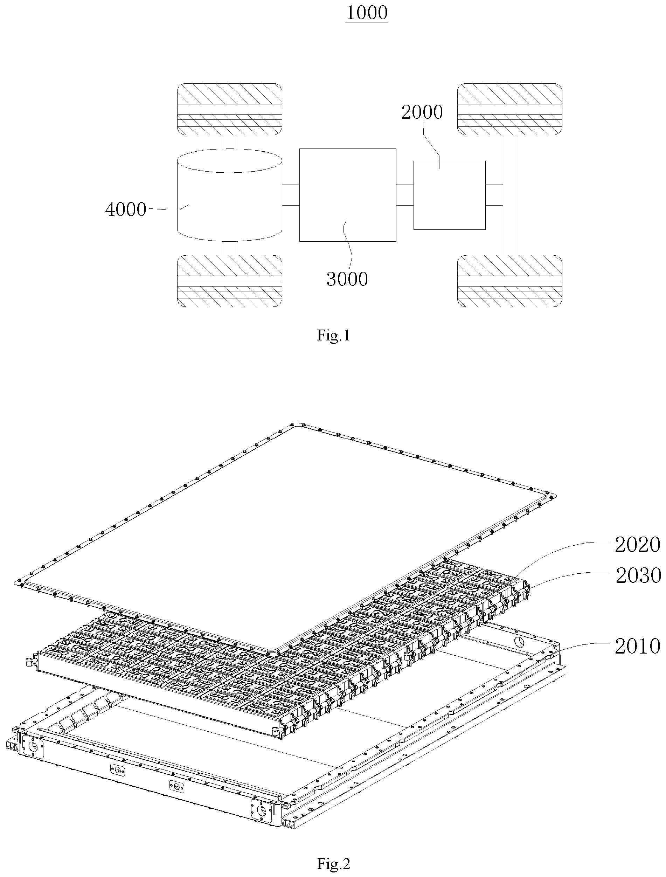

Fig. 1 is a schematic structural diagram of a vehicle provided by some embodiments of the present application.

As shown in Fig. 1, a battery 2000 is provided inside the vehicle 1000 and may be provided at the bottom or a head or a tail of the vehicle 1000. The battery 2000 can be configured for power supply of the vehicle 1000, for example, the battery 2000 can serve as an operating power source of the vehicle 1000.

The vehicle 1000 may also include a controller 3000 and a motor 4000, the controller 3000 is configured for controlling the battery 2000 to supply power to the motor 4000, for example, for operating electricity requirements during start-up, navigation and running of the vehicle 1000.

In some embodiments of the present application, the battery 2000 may not only serve as the operating power source of the vehicle 1000, but also serve as a driving power source for the vehicle 1000, so as to replace or partially replace fuel or natural gas to provide driving power for the vehicle 1000.

Fig. 2 is a exploded schematic diagram of a battery provided in some embodiments of the present application.

As shown in Fig. 2, the battery 2000 includes a housing 2010 and a battery cell 2020 accommodated in the housing 2010.

One or more battery cells 2020 may be provided in the battery 2000. If a plurality of battery cells 2020 are provided, the plurality of battery cells 2020 may be connected with one another in series, in parallel or in a parallel-series manner, the parallel-series manner indicating that the plurality of battery cells 2020 are connected in both series and parallel. The plurality of battery cells 2020 may be directly connected in series, in parallel or in a parallel-series manner, and then a whole formed by the plurality of battery cells 2020 is accommodated in the housing 2010; of course, the plurality of battery cells 2020 may be connected in series, in parallel or in a parallel-series manner to form a battery module first, and then a plurality of battery modules are connected in series, in parallel or in a parallel-series manner to form a whole to be accommodated in the housing 2010.

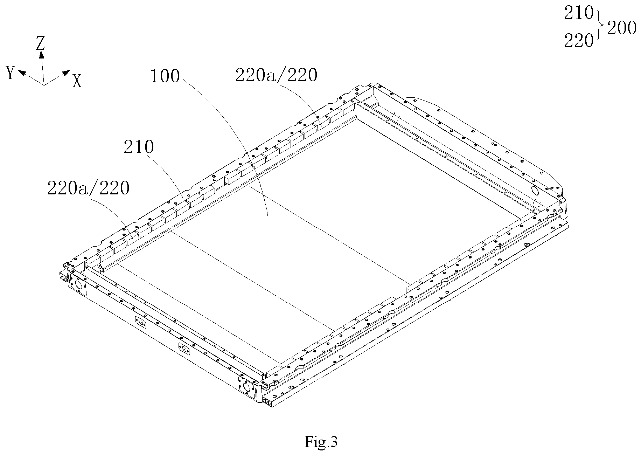

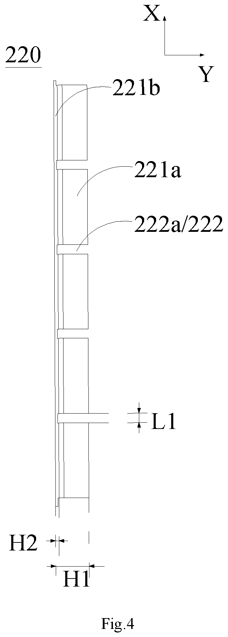

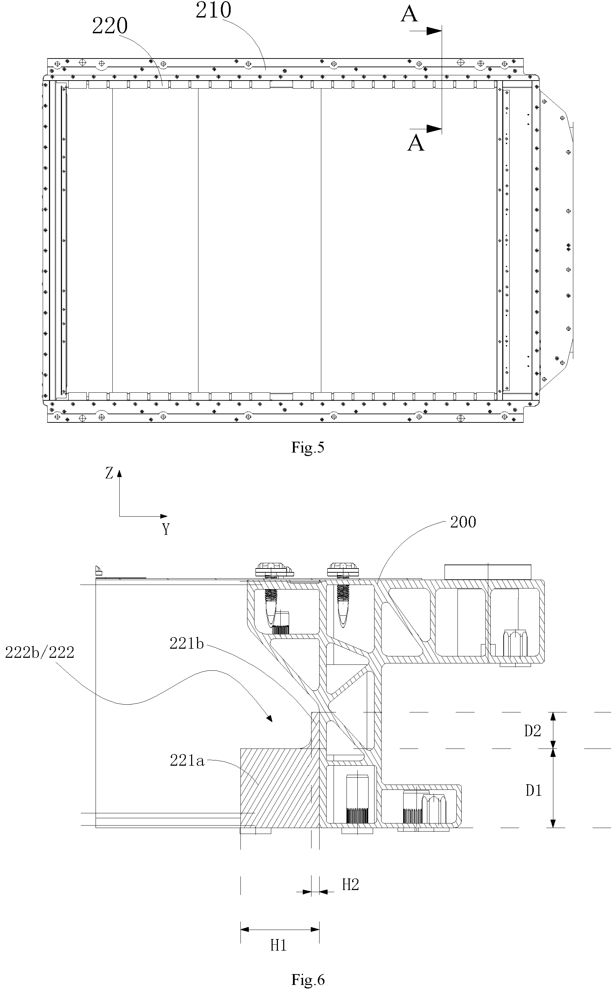

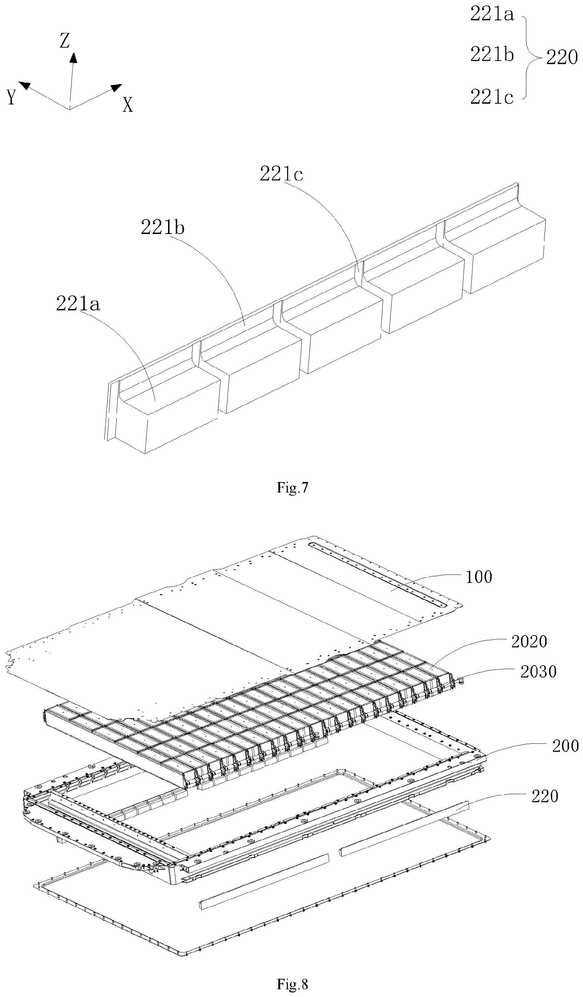

Fig. 3 is a schematic structural diagram of a housing of a battery 2010 provided in some embodiments of the present application. Fig. 4 is a schematic structural diagram of a buffer portion 220 of a housing of a battery 2010 provided in some embodiments of the present application. Fig. 5 is a another perspective schematic diagram of the housing of the battery 2010 shown in Fig. 3. Fig. 6 is a cross-sectional structural schematic diagram along a line A-A in Fig. 5. Fig. 7 is another perspective schematic diagram of the buffer portion 220 of the housing of the battery 2010 shown in Fig. 4.

As shown in Figs. 3 to 7, a housing of a battery 2010 of an embodiment of the present application includes a support plate 100 and a plurality of side beams 200 which are connected to the support plate 100 and enclose with the support plate 100 to form an accommodating space, wherein at least one side beam 200 includes a beam body 210 and a buffer portion 220 which is provided to protrude from the beam body 210 toward the accommodating space and extend in a length direction of the beam body 210, and the buffer portion 220 is located on a side of the beam body 210 away from the support plate 100.

The support plate 100 is connected to the plurality of side beams 200, and may be connected to the plurality of side beams 200 by any one means such as welding, riveting, screw fastening or structural adhesive bonding.

In some examples of this embodiment, the side beam 200 is a structural member made of an aluminum profile, such as made by welding or die casting of an aluminum alloy profile, which can reduce the weight of the support frame while the structural strength is satisfied. In addition, the support plate 100 is a plate made of aluminum alloy or carbon steel.

The buffer portion 220 is provided on a side of the beam body 210 away from the support plate 100, avoiding the battery cell 2020 in the accommodating space, which improves the utilization of the space of the housing 2010. In some examples of this embodiment, the buffer portion 220 may also be provided on a side of the beam body 210 away from the support plate 100, so as to decrease the weak area of the housing 2010 and improve the compression resistance property of the housing 2010.

The side beam 200 have a buffering effect due to the buffer portion 220, which can effectively absorb the compressing force transmitted from the side of the housing 2010 to the side beam 200, thereby improving the compression resistance property of the side beam 200.

In the embodiments of the present application, the buffer portion 220 is added onto the side beam 200 so as to reduce the compressing force on the side beam 200, so the compression resistance property of the side beam 200 is improved, which reduces the possibility of the battery cell 2020 in the housing being compressed, deformed or even damaged, improving the safety of the housing of the battery 2010. In this embodiment, the buffer portion 220 is provided on the side of the side beam 200 facing the accommodating space, so that the buffer portion 220 can absorb a part of the external force after the housing 2010 is compressed by an external force and the force received by an outer structure of the housing 2010 is transmitted to the buffer portion 220, which reduces the compression of the external force on the battery cells 2020 in the housing 2010.

In some embodiments, the buffer portion 220 includes a plurality of buffer blocks 221 arranged to be spaced apart in the length direction.

The buffer block 221 may be a cube, a cuboid, a circular frustum, etc. The shape of the buffer portion 220 may be a solid structure or a hollow structure.

In this embodiment, the provision of the plurality of buffer blocks 221 on the buffer portion 220 can effectively reduce the weight that the buffer portion 220 brings to the housing 2010, and the buffer block 221 can utilize the space between the housing 2010 and the internal battery cell 2020, which improves the utilization of the housing 2010.

In some embodiments, the plurality of buffer blocks 221 are arranged to be equally spaced apart in an extension direction X of the beam body.

In this embodiment, the plurality of buffer blocks 221 are arranged to be equally spaced apart to facilitate the manufacture of the buffer blocks 221 and reduce the difficulty of the process.

In some embodiments, in the extension direction X of the beam body, the distance between two adjacent buffer blocks 221 is L1, and 1mm≤L1≤1500mm; optionally, 5mm≤L1≤20mm.

In this embodiment, the smaller the distance between adjacent buffer blocks 221, the greater the quantity of the buffer blocks 221 is, and the more the weight of the buffer blocks 221 increases, which is detrimental to the lightweight of the housing 2010. The larger the distance between the adjacent buffer blocks 221, the fewer the quantity of the buffer blocks 221, the smaller the buffering effect of the buffer blocks 221, and the smaller the compression resistance capability of the housing 2010. In this embodiment, the distance between the adjacent buffer blocks 221 is limited to the relationship of 1mm≤L1≤1500mm, so as to balance the lightweight and compression resistance property of the housing 2010.

In some embodiments, the buffer portion 220 further includes an avoidance structure 222 which is configured to avoid a component accommodated in the accommodating space.

The avoidance structure 222 is configured to avoid the battery cells 2020, heat management components 2030, etc., in the housing 2010. In other words, the avoidance structure 222 is in an avoidance shape and a reserved avoidance space 222b made of the buffer portion 220 for the component in the housing 2010.

In this embodiment, the avoidance structure 222 can enable the buffer portion 220 to further utilize the clearance of the batteries in the accommodating space, so the overall volume of the buffer portion 220 increases, which enables the buffer portion 220 to absorb much external force, improving the compression resistance property and the space utilization of the housing 2010.

In some embodiments, the avoidance structure 222 includes a gap 222a between the buffer blocks 221.

In this embodiment, the gap 222a between adjacent buffer blocks 221 can be configured to receive various components of the battery in the housing 2010, avoiding the interference between the buffer block 221 and the components in the accommodating space, which improves the space utilization of the buffer portion 220.

In some embodiments, the buffer block 221 includes a body portion 221a and an avoidance portion 221b extending from the body portion 221a toward the support plate 100, the avoidance portion 221b protrudes from the beam body 210 toward the accommodating space, and in the protruding direction Y of the avoidance portion 221b, a thickness of the body portion 221a is larger than a thickness of the avoidance portion 221b.

The body portion 221a serves as a main buffer portion 220 for resisting the compressing force, and a side of the body portion 221a abuts against the support plate 100, which can enable the body portion 221a to absorb a part of the compressing force received by the support portion, improving the overall compressing resistance property of the housing 2010.

The body portion 221a extends on a side of the body portion 221a facing away from the support plate 100 to form the avoidance portion 221b, and the avoidance portion 221b may be connected to the body portion 221a by means of welding, bonding, etc. Alternatively, the avoidance portion 221b and the body portion 221a may be integrally formed. The shape of the avoidance portion 221b may be a cube, a cuboid, etc.

In some examples of this embodiment, for ease of manufacture, the body portion 221a and the avoidance portion 221b may be made of the same material. In some other examples of this embodiment, in order to improve the compressing resistance property of the avoidance portion 221b, the compression resistance performance of the material used for the avoidance portion 221b is better than that of the material used for the body portion 221a.

In this embodiment, a thickness of the avoidance portion 221b is smaller than a thickness of the body portion 221a and it may be filled in a region which the cannot be protected by the body portion 221a and in which the gap 222a inside the housing 2010 is small, so as to increase the protection region of the buffer portion 220, thereby improving the compression resistance performance of the housing 2010.

In some embodiments, the avoidance structure 222 further includes an avoidance space 222b from a surface of the avoidance portion 221b to a surface of the body portion 221a in the protruding direction Y.

In this embodiment, the avoidance space 222b formed by the avoidance portion 221b and the body portion 221a is configured to receive a component in the housing 2010 and protect the component in the avoidance space 222b, which reduces the influence of the external compressing force on the component in the avoidance space 222b.

In some embodiments, a thickness of the body portion 221a in the protrusion direction Y is H1, and 5 mm≤H1≤100 mm.

In this embodiment, the smaller the thickness of the body portion 221a, the less external force the body portion 221a may absorb and the less the impact resistance performance may be achieved. The larger the thickness of the body portion 221a, the greater the space occupied by the body portion 221a and the weight of the body portion 221a, and the higher the cost. In this embodiment, the thickness of the body portion 221a is limited to the relationship of 5 mm≤H1≤100 mm, so as to reduce the thickness of the body portion 221a as much as possible while ensuring the impact resistance performance of the body portion 221a.

In some embodiments, a thickness of the avoidance portion 221b in the protruding direction Y is H2, and H1 and H2 satisfy the relationship of 0.005≤H2/H1<1.

In this embodiment, the smaller the ratio of the thickness of the avoidance portion 221b to the thickness of the body portion 221a, the smaller the impact resistance performance of the avoidance portion 221b. The larger the ratio of the thickness of the avoidance portion 221b to the thickness of the body portion 221a, the greater the space occupied by the avoidance portion 221b and the weight of the avoidance portion 221b, and the higher the cost. In this embodiment, the thickness of the avoidance portion 221b is limited to the relationship of 0.005≦H2/H1<1, so as to reduce the thickness of the avoidance portion 221b as much as possible while ensuring the impact resistance property of the avoidance portion 221b.

In some embodiments, a height of the body portion 221a in a thickness direction Z of the support plate 100 is D1, and 10 mm≤D1≤100 mm.

In this embodiment, the lower the height of the body portion 221a, the smaller the impact resistance performance of the body portion 221a. The higher the height of the body portion 221a, the larger the space occupied by the body portion 221a and the weight of the body portion 221a, and the higher the cost. The height of the main body 221a is reduced as much as possible while ensuring the impact resistance property of the main body 221a, .

In some embodiments, the height of the avoidance portion 221b in the thickness direction Z of the support plate 100 is D2, and 10 mm≤D1≤100 mm.

In this embodiment, the smaller the ratio of the height of the avoidance portion 221b to the height of the body portion 221a, the smaller the impact resistance property of the avoidance portion 221b. The larger the ratio of the height of the avoidance portion 221b to the height of the body portion 221a, the greater the space occupied by the avoidance portion 221b and the weight of the avoidance portion 221b, and the higher the cost. The height of the avoidance portion 221b is reduced as much as possible while ensuring the impact resistance performance of the avoidance portion 221b, .

In some embodiments, the buffer portion 220 includes a connecting portion 230 which connects the plurality of buffer blocks 221 in the extension direction X of the beam body.

In some examples of this embodiment, the connecting portion 230 may be connected to the buffer block 221 by bolts, welding, gluing, or like means. In still some examples of this embodiment, the connecting portion 230 and the buffer block 221 may be integrally formed.

In this embodiment, the compressing force received by the buffer portion 220 may spread among the plurality of buffer blocks 221 through the connecting portion 230, and the compressing force on the local buffer portion 220 is converted into the compressing force on the whole buffer portion 220, thereby reducing the influence of the compressing force on the buffer portion 220, which improves the compressing resistant property of the housing 2010.

In some embodiments, the buffer portion 220 and the beam body 210 are integrally formed. The buffer portion 220 and the beam body 210 may be formed by casting, 3D printing, or like means, which can reduce an assembly step and improve assembly efficiency.

In some embodiments, the buffer portion 220 is fixedly connected to the beam body 210.

The buffer portion 220 may be connected to the beam body 210 by screwing, welding, gluing, or like means.

In this embodiment, the buffer portion 220 and the beam body 210 are two independent individuals, and the position of the buffer portion 220 may be adjusted according to the position of the battery in the housing 2010, thereby reducing the requirement on the process error of the buffer portion 220, which reduces the manufacturing cost of the buffer portion 220.

Referring to Fig. 3, in some embodiments, the buffer portion 220 includes a plurality of sub-buffer portions 220a which are arranged to be spaced apart in the length direction of the beam body, and the gap 222a between two adjacent sub-buffer portions 220a forms an avoidance portion 222b.

The plurality of sub-buffers 220a may be provided on the same beam body 210, and the lengths of any two sub-buffers 220a extending in the length direction of the beam body may be the same for ease of the installation between the buffer 220 and the side beam 200. The lengths of any two sub-buffer portions 220a extending in the length direction of the beam body may be different, so that the component inside the housing 2010 can be avoided flexibly.

In this embodiment, the division of the buffer portion 220 into the plurality of sub-buffer portions 220a allows the buffer portion 220 to be placed in the housing 2010 so as to adapt to different internal structures, avoiding the interference between the buffer portion 220 and the internal structure of the housing 2010, which improves the utilization inside the housing 2010.

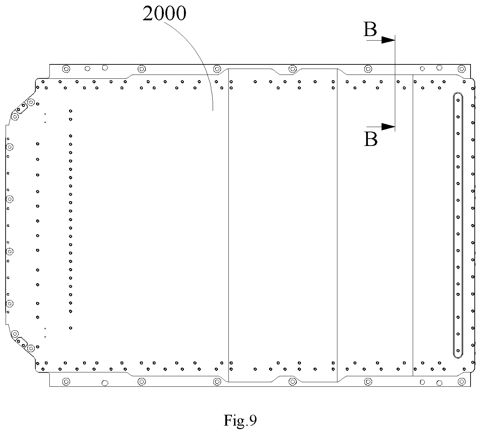

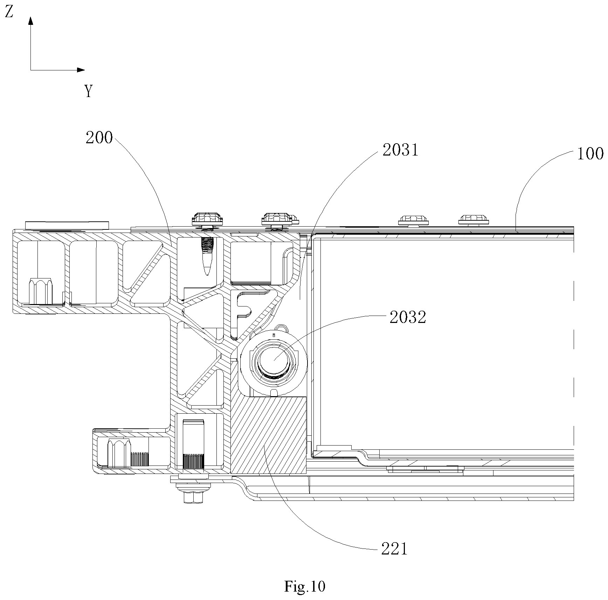

Fig. 8 is a exploded schematic diagram of a battery provided by some embodiments of the present application. Fig. 9 is a schematic structural diagram of a battery provided by some embodiments of the present application. Fig. 10 is a cross-sectional structural schematic diagram along a line B-B in Fig. 9.

In some embodiments, the present application also provides a battery including the plurality of housings 2010 of the battery of any one of the above embodiments and a battery cell 2020 . The battery cell 2020 is accommodated in an accommodating space.

In some embodiments, the battery further includes a thermal management component 2030 accommodated in the accommodating space and configured to adjust the temperature of the battery cell 2020, and the housing 2010 includes an avoidance structure 222 which is configured to avoid the thermal management component 2030.

In this embodiment, the buffer portion 220 is placed in the accommodating space adjacent to the thermal management component 2030 so as to protect the thermal management component 2030, which prevents the thermal management component 2030 from being deformed or damaged by the compressing force, improving the safety of the housing of the battery 2010.

In some embodiments, the thermal management component 2030 includes a plurality of heat exchange plates 2031 arranged to be spaced apart, and the battery cell 2020 is provided between adjacent heat exchange plates 2031. The buffer portion 220 includes a plurality of buffer blocks 221 arranged to be spaced apart, and the avoidance structure 222 includes a gap 222a between the buffer blocks 221 which is configured to accommodate an end of the heat exchange plates 2031.

In this embodiment, the end of the heat exchange plate 2031 protrudes from the buffer block 221, the avoidance structure 222 of the buffer portion 220 can accommodate the protruding end of the heat exchange plate 2031, and the connecting portion 230 of the buffer portion 220 can protect the end of the heat exchange plate 2031, which reduces the influence of the compressing force on the end of the heat exchange plate 2031, further improving the protection of the buffer portion 220 for the heat exchange plate 2031.

In some embodiments, the heat management component 2030 includes a converging pipe 2032 which is communicated with the plurality of heat exchange plates 2031; the buffer block 221 includes a body portion 221a and an avoidance portion 221b, the body portion 221a being located on a side of the beam body away from the support plate 100, the avoidance portion 221b being located on a side of the body portion 221a close to the support plate 100 and protruding from the beam body 210 toward the accommodating space; wherein the avoidance structure 222 includes an avoidance portion 222b from a surface of the avoidance portion 221b to a surface of the body portion 221a in the protruding direction Y, and the converging pipe 2032 is at least partially located in the avoidance portion 222b.

In this embodiment, the avoidance portion 221b in the buffer portion 220 is adjacent to the converging pipe 2032 for protecting the converging pipe 2032, reducing the influence of the external compressing force on the converging pipe 2032, which improves the influence of the buffer portion 220 on the converging pipe 2032. Furthermore, the converging pipe 2032 is placed in the avoidance space 222b between the avoidance portion 221b and the body portion 221a, the body portion 221a may also absorb the compressing force from the direction of the support portion and protect the converging pipe 2032 from being affected by the compressing force in plurality of directions.

In some embodiments, the embodiment of the present application provides a power consumption device including the battery according to any one of the embodiments in a second aspect for providing electric energy.

In some embodiments, referring to Fig. 3 to Fig. 7, the present application provides a housing of a battery 2010 includes a support plate 100 and a plurality of side beams 200. A plurality of side beams 200 are connected to the support plate 100 and enclose with the support plate 100 to form an accommodating space. The two opposite side beams 200 include a beam body 210 and a buffer portion 220 which is provided protruding from the beam body 210 toward the accommodating space and extending in the length direction of the beam body 210, and the buffer portion 220 is located on a side of the beam body 210 away from the support plate 100.

The buffer portion 220 includes a buffer block 221, an avoidance structure 222 and a connecting portion 230. The plurality of buffer blocks 221 are arranged to be spaced apart in the length direction via the gap 222a. The buffer block 221 includes a body portion 221a and an avoidance portion 221b extending from the body portion 221a toward the support plate 100 and protruding from the beam body 210 toward the accommodating space, and in the protruding direction Y of the avoidance portion 221b, a thickness of the body portion 221a is greater than a thickness of the avoidance portion 221b. The connecting portion 230 connects the plurality of buffer blocks 221 in the extension direction X of the beam body. The buffer portion 220 includes a first sub-buffer portion 220a and a second sub-buffer portion 220b which are arranged to be spaced apart in the extension direction X of the beam body. The avoidance structure 222 includes a gap 222a between the buffer blocks 221, the avoidance space 222b from a surface of the avoidance portion 221b to a surface of the body portion 221a in the protruding direction Y, and the gap 222a between the first sub-buffer portion 220a and the second sub-buffer portion 220b forms an avoidance space 222b.

It should be noted that the embodiments in the application and features in the embodiments may be combined with one another if there is no conflict.

It should be finally noted that, the above embodiments are merely used for illustrating, rather than limiting, the technical solutions of the present application; although the present application has been described in detail with reference to the foregoing embodiments, it should be understood by those of ordinary skill in the art that, they can still modify the technical solutions described in the foregoing embodiments, or make equivalent substitutions to some of the technical features therein, but these modifications or substitutions do not make the essence of the corresponding technical solutions deviate from the gist and scope of the technical solutions of each embodiment of the application.

## Claims

1. A housing of a battery, comprising
a support plate; and
a plurality of side beams which are connected to the support plate and enclose with the support plate to form an accommodating space,
wherein at least one of the side beams comprises a beam body and a buffer portion which is provided to protrude from the beam body toward the accommodating space and extend in a length direction of the beam body, and the buffer portion is located on a side of the beam body away from the support plate.

2. The housing according to claim 1, wherein the buffer portion comprises a plurality of buffer blocks arranged to be spaced apart in the length direction.

3. The housing according to claim 2, wherein the plurality of buffer blocks are arranged to be equally spaced apart in an extension direction of the beam body.

4. The housing according to claim 3, wherein in the extension direction of the beam body, a distance between two adjacent buffer blocks is L1, and 1 mm≤L1≤1500 mm.

5. The housing according to claim 4, wherein the distance **L1** between the two adjacent buffer blocks satisfies a relationship of 5 mm ≤ L1 ≤ 20 mm.

6. The housing according to claim 2, wherein the buffer portion further comprises an avoidance structure for avoiding a component accommodated in the accommodating space.

7. The housing according to claim 6, wherein the avoidance structure comprises a gap between two adjacent buffer blocks.

8. The housing according to claim 6, wherein the buffer block comprises a body portion and an avoidance portion extending from the body portion toward the support plate, the avoidance portion being provided protruding from the beam body toward the accommodating space; and
wherein in a protruding direction of the avoidance portion, a thickness of the body portion is larger than a thickness of the avoidance portion.

9. The housing according to claim 8, wherein the avoidance structure further comprises an avoidance space from a surface of the avoidance portion to a surface of the body portion in the protruding direction.

10. The housing according to claim 8, wherein a thickness of the body portion in the protruding direction is H1, and 5 mm≤H1≤100 mm.

11. The housing according to claim 10, wherein a thickness of the avoidance portion in the protruding direction is H2, and H1 and H2 satisfy the relationship of 0.005≤H2/H1<1.

12. The housing according to claim 8, wherein a height of the body portion in a thickness direction of the support plate is D1, and 10 mm≤D1≤100 mm.

13. The housing according to claim 8, wherein a height of the avoidance portion in a thickness direction of the support plate is D2, and 10 mm≤D2≤100 mm.

14. The housing according to claim 2, wherein the buffer portion comprises a connection portion which connects the plurality of buffer blocks in an extension direction of the beam body.

15. The housing according to any one of claims 1-14, wherein the buffer portion and the beam body are integrally formed.

16. The housing according to any one of claims 1-15, wherein the buffer portion is fixedly connected to the beam body.

17. The housing according to any one of claims 1-16, wherein the buffer portion comprises a plurality of sub-buffer portions which are arranged to be spaced apart in the length direction of the beam body, and a gap between two adjacent sub-buffer portions forms an avoidance space.

18. A battery, comprising
the housing according to any one of claims 1 to 17; and
a battery cell which is accommodated in the accommodating space.

19. The battery according to claim 18, further comprising a thermal management component which is accommodated in the accommodating space and configured to adjust temperature of the battery cell, the housing comprises an avoidance structure for avoiding the thermal management component .

20. The battery according to claim 19, wherein the thermal management component comprises a plurality of heat exchange plates arranged to be spaced apart, and the battery cell is arranged between adjacent heat exchange plates; and
the buffer portion comprises a plurality of buffer blocks arranged to be spaced apart, and the avoidance structure comprises a gap between the buffer blocks, and the gap is configured to accommodate an end of the heat exchange plate.

21. The battery according to claim 20, wherein the thermal management component comprises a converging pipe which is communicated with the plurality of heat exchange plates;
the buffer block comprises a body portion and an avoidance portion, the body portion is located on a side of the beam body away from the support plate, and the avoidance portion is located on a side of the body portion close to the support plate and protrudes from the beam body toward the accommodating space; and
wherein the avoidance structure comprises a avoidance space from a surface of the avoidance portion to a surface of the body portion in a protruding direction, and at least a portion of the converging pipe is located in the avoidance space.

22. A power consumption device, comprising the battery according to any one of claims 18-21 for providing electric energy.
